# EUROPEAN PATENT APPLICATION

(11) **EP 1 962 037 A1**
(43) Date of publication of application: **27.08.2008**
(21) Application number: 06834309.4
(22) Date of filing: 08.12.2006
(51) Int. Cl.: F25D 11/00, F25D 29/00

(54) **ELECTRICAL EQUIPMENT BOX OF FREEZING DEVICE FOR CONTAINER**

(30) Priority: 15.12.2005 JP 2005361365
(71) Applicant: Daikin Industries, Ltd., Osaka-shi, Osaka 5308323 (JP)
(72) Inventor: ISHIHARA, Hiroki, DAIKIN INDUSTRIES, LTD., Sakai-shi Osaka 591-8511 (JP); KUROISHI, Masashi, DAIKIN INDUSTRIES, LTD, Sakai-shi Osaka 591-8511 (JP)
(74) Representative: HOFFMANN EITLE
(86) International application number: PCT/JP2006/324554
(87) International publication number: WO 2007/069545

(57) **Abstract**

A reinforcing plate (50) is mounted on the bottom plate (33) of a box body (31) of an electrical component box (30). A plurality of risers (51, 52, 53) are formed by cutting a side edge of the reinforcing plate (50) into some pieces and bending the pieces upward. A safety cover (38) for opening and closing an opening of the box body (31) is fitted between the risers (51, 52, 53) and thereby held by the reinforcing plate (50).

## Description

### Technical Field

This invention relates to structures of electrical component boxes used in container refrigeration systems for cooling the interiors of containers.

### Background Art

Container refrigeration systems are conventionally used for cooling the interiors of containers for use in sea transport or other transports.

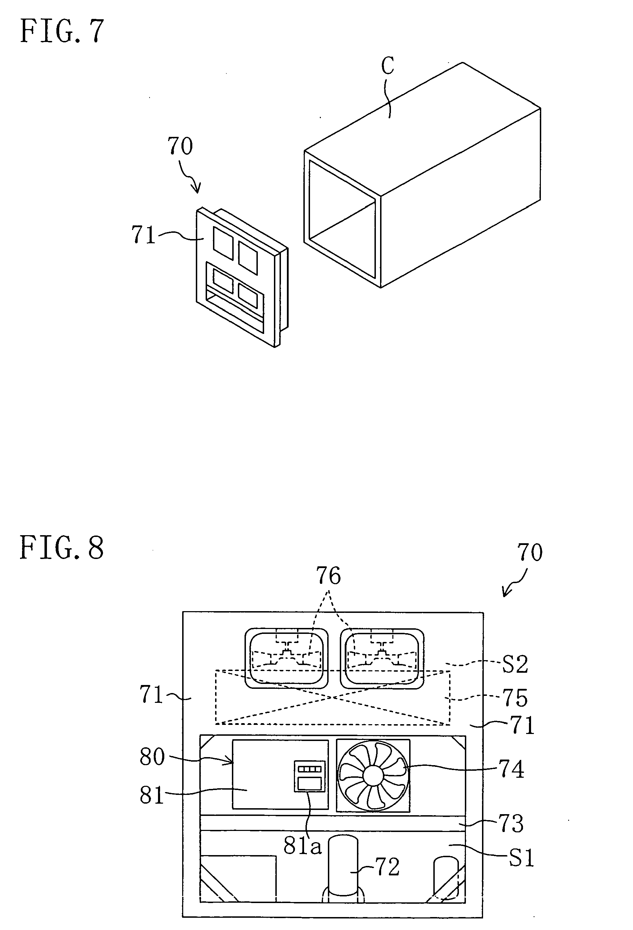

For example, Patent Documents 1 and 2 disclose container refrigeration systems of this kind. As shown in Figures **7** and **8****,** a container refrigeration system **(70)** is assembled to the front opening of a container **(C).** A frame **(71)** of the container refrigeration system **(70)** has an exterior storage space **(S1)** formed in a lower part thereof to open onto the outside. Placed in the exterior storage space **(S1)** are a compressor **(72),** a condenser **(73)** and an external fan **(74).** The frame **(71)** has also an interior storage space **(S2)** formed in an upper part thereof to open onto the interior of the container **(C).** Placed in the interior storage space **(S2)** are an evaporator **(75)** and an internal fan **(76).** In the container refrigeration system **(70),** the compressor **(72),** the condenser **(73),** the evaporator **(75)** and other components are connected through refrigerant pipes to form a refrigerant circuit. In the container refrigeration system **(70),** the refrigerant circuit operates in a refrigeration cycle by circulating refrigerant therethrough, whereby the evaporator **(75)** cools the interior of the container **(C).**

The frame **(71)** of a container refrigeration system **(70)** of this kind further includes an electrical component box **(80)** mounted in a side face (the front face) thereof. The electrical component box **(80)** is formed in the shape of a box having an opening in the front and stores heavy electrical components, such as a breaker, a transformer and magnet switches, and light electrical components, such as control boards. The opening of the electrical component box **(80)** is covered with an outside lid **(81).** The outside lid **(81)** is provided with an operating part **(81a)** through which the user conducts operation mode change and other controls of the container refrigeration system **(70).**

Such an electrical component box **(30)** is disposed above the compressor **(21)** in the frame **(71)** because of space limitations imposed by installation spaces for the compressor **(72)** and other components. Therefore, the frame **(71)** includes support plates for supporting the bottom plate and the top plate of the electrical component box **(30).** The electrical component box **(30)** is fastened to the support plates by bolts and nuts.

A safety cover is attached to the opening of an electrical component box **(30)** of this kind inwardly of the outside lid **(81).** The safety cover has an opening formed to expose only the breaker in the electrical component box **(30)** to the outside. The other electrical components are covered with the safety cover. In other words, the safety cover prevents the user from touching the electrical components other than the breaker in turning on/off the breaker switch. Also attached to the electrical component box are hinges or like fittings to allow the safety cover to open and close the opening. Thus, the electrical component box is configured to allow the safety cover to be opened only in doing maintenance on the electrical components.
Patent Document 1: Published Japanese Patent Application No. 2004-353912
Patent Document 2: Published Japanese Patent Application No. 2004-325022

### Disclosure of the Invention

### Problems to Be Solved by the Invention

Because of a characteristic of container refrigeration systems that are used at sea, electrical component boxes as described above must be made from a high corrosion resistant material in order to be prevented from being rusted by salt water. However, in view of material cost saving, it is desirable that the electrical component box is reduced in thickness as much as possible. In addition, if the electrical component box is thus reduced in thickness, the stress on support members for supporting the electrical component box, such as support plates, is also reduced, which simplifies these support members.

On the other hand, if the electrical component box is thus reduced in thickness, its durability deteriorates. Particularly in the bottom plate of the electrical component box, a portion supported by the support plate of the frame is put under a large load. Therefore, reduction in thickness of the electrical component box makes the portion of the bottom plate more likely to break. To eliminate this problem, it can be considered that a reinforcing plate is placed on the bottom plate of the electrical component box. In this case, however, the number of parts of the electrical component box increases.

The present invention has been made in view of the foregoing points and, therefore, an object thereof is to reinforce the bottom plate of an electrical component box of a container refrigeration system without increasing the number of parts.

### Means to Solve the Problems

A first aspect of the invention is directed to an electrical component box of a container refrigeration system for cooling the interior of a container **(C).** Furthermore, the electrical component box of the container refrigeration system includes: a box body **(31)** formed in the shape of a box having an opening in one face and supported, with the opening oriented sideways, to a frame **(20)** of the container refrigeration system from below; a safety cover **(38)** for opening and closing the opening of the box body **(31);** and a reinforcing plate **(50)** mounted on the bottom plate **(33)** of the box body **(31)** to sandwich the bottom plate **(33)** between the reinforcing plate **(50)** and the frame **(20),** the reinforcing plate **(50)** having a holder **(51, 52, 53)** for holding the safety cover **(38).**

In the first aspect of the invention, the box body **(31)** for storing electrical components therein is mounted so that it is supported to the frame **(20).** If, in this state, the bottom plate **(33)** of the box body **(31)** is supported from below to the frame **(20),** most of the weights of the box body **(31)** and the electrical components contained in the box body **(31)** is placed on the supporting portion of the bottom plate **(33).** Therefore, in this aspect of the invention, the reinforcing plate **(50)** is mounted on the bottom plate **(33)** to prevent the supporting portion of the bottom plate **(33)** from being broken.

Furthermore, the opening of the box body **(31)** is provided with a safety cover **(38)** for opening and closing the opening. When the opening of the box body **(31)** is closed with the safety cover **(38),** the safety cover **(38)** covers the electrical components. Therefore, the electrical components are not exposed to the user, which surely avoids that the user touches the energized electrical components. On the other hand, in making an exchange of or repairs to any of the electrical components, the safety cover **(38)** is opened to expose the electrical components to the user.

Furthermore, in this aspect of the invention, the reinforcing plate **(50)** has a holder **(51, 52, 53)** formed to hold the safety cover **(38).** The holder **(51, 52, 53)** holds the safety cover **(38)** at the opening of the box body **(31)** to ensure that the electrical components are covered with the safety cover **(38).**

A second aspect of the invention is the electrical component box of the container refrigeration system according to the first aspect of the invention, wherein the box body **(31)** is made from a resin material.

In the second aspect of the invention, since the box body **(31)** is made from a resin material, the box body **(31)** can be prevented from being rusted by seawater and can be reduced in weight.

Meanwhile, when the box body **(31)** is made from a resin material, it is difficult to ensure the strength of the box body **(31)** as compared to the box body made from stainless steel. In this aspect of the invention, however, since the reinforcing plate **(50)** is mounted on the bottom plate **(33)** of the box body **(31),** this prevents the supporting portion of the bottom plate **(33)** from being broken.

A third aspect of the invention is the electrical component box of the container refrigeration system according to the first or second aspect of the invention, wherein the interior of the box body **(31)** is divided into a heavy electrical component storage space **(S3)** for storing heavy electrical components and an light electrical component storage space **(S4)** for storing light electrical components, and the safety cover **(38)** and the reinforcing plate **(50)** are provided only in the heavy electrical component storage space **(S3).**

In the third aspect of the invention, the interior of the box body **(31)** is divided into a heavy electrical component storage space **(S3)** and a light electrical component storage space **(S4).** Stored in the heavy electrical component storage space **(S3)** are heavy electrical components, such as a breaker, a transformer and magnet switches. On the other hand, stored in the light electrical component storage space **(S4)** are light electrical components, such as control boards.

Heavy electrical components have large weights as compared to light electrical components. Therefore, a large load is placed particularly on part of the bottom plate **(33)** located in the heavy electrical component storage space **(S3).** To cope with this, in this aspect of the invention, the reinforcing plate **(50)** is mounted only in the heavy electrical component storage space **(S3).** Therefore, the particularly breakable part of the bottom plate **(33)** can be effectively reinforced by the reinforcing plate **(50)** and the area of the reinforcing plate **(50)** can be reduced to the minimum necessary.

Furthermore, heavy electrical components have higher service voltages than light electrical components. The heavy electrical components in service would be dangerous especially in case of exposure to the user. To cope with this, in this aspect of the invention, the safety cover **(38)** is provided only in the heavy electrical component storage space **(S3).** Therefore, the heavy electrical components can be surely prevented from being exposed to the user and the area of the safety cover **(38)** can be reduced to the minimum necessary.

A fourth aspect of the invention is the electrical component box of the container refrigeration system according to any one of the first to third aspects of the invention, wherein the holder comprises a plurality of risers **(51, 52, 53)** formed by cutting a side edge of the reinforcing plate **(50)** into some pieces and bending the pieces upward, and the safety cover **(38)** is detachably attached to the reinforcing plate **(50)** with the lower end thereof fitted between the plurality of risers **(51, 52, 53).**

In the fourth aspect of the invention, a plurality of risers **(51, 52, 53)** are formed by cutting a side edge of the reinforcing plate **(50)** into some pieces and bending the pieces upward. Formed thus between the risers **(51, 52, 53)** is a space for fitting the lower end of the safety cover **(38)** therein. As a result, the safety cover **(38)** can be detachably attached to the reinforcing plate **(50),** which allows the safety cover **(38)** to open and close the opening of the box body **(31).**

### Effects of the Invention.

According to the present invention, since the reinforcing plate **(50)** is mounted on the bottom plate **(33)** of the box body **(31),** the bottom plate **(33)** can be reinforced. This surely prevents the box body **(31)** from being broken and reduces the thickness of the box body **(31)** and in turn reduces the weight of the box body **(31).** Therefore, the box body **(31)** can be reduced in cost and, in turn, the frame **(20)** supporting the box body **(31)** can be simplified.

In the present invention, the reinforcing plate **(50)** has a holder **(51, 52, 53)** formed to hold the safety cover **(38).** Therefore, although in conventional electrical component boxes a member for holding the safety cover needs to be provided separately, the electrical component box according to the present invention does not need such a member. Hence, according to the present invention, the bottom plate **(33)** of the box body **(31)** can be reinforced without increasing the number of parts, thereby providing an electrical component box having a simple structure.

Particularly according to the second aspect of the invention, since the box body **(31)** is made from a resin material, the box body **(31)** can be further reduced in weight. Since the reinforcing plate **(50)** is mounted on the bottom plate **(33)** while the box body **(31)** is made from a resin material, the bottom plate **(33)** can be prevented from being broken. Furthermore, when the box body **(31)** of the container refrigeration system **(10)** for use in sea transport is made from a resin material, the box body **(31)** can be effectively prevented from being rusted by salt water. Therefore, the box body **(31)** can be enhanced in durability.

Furthermore, in the third aspect of the invention, the reinforcing plate **(50)** and the safety cover **(38)** are disposed only in the heavy electrical component storage space **(S3).** Therefore, the reinforcing plate **(50)** and the safety cover **(38)** can be saved in size, thereby reducing the cost of the electrical component box. Although in respect of the bottom plate **(33)** of the box body **(31)** its part in the heavy electrical component storage space **(S3)** is put under a large load, the reinforcing plate **(50)** mounted on that part effectively prevents the box body **(31)** from being broken. Furthermore, since the heavy electrical components that would be dangerous especially in case of the user touching them are covered with the safety cover **(38),** the safety of the user can be sufficiently ensured.

According to the fourth aspect of the invention, since a plurality of risers **(51, 52, 53)** are formed by cutting a side edge of the reinforcing plate **(50)** into some pieces and bending the pieces upward, the holder for the safety cover **(38)** can be formed in the reinforcing plate **(50)** by a relatively simple machining.

### Brief Description of Drawings

[Fig. 1] Figure **1** is a schematic perspective view of a container refrigeration system according to an embodiment of the present invention as viewed from the front.
[Fig. 2] Figure **2** is a longitudinal cross-sectional view of the container refrigeration system.
[Fig. 3] Figure **3** is a schematic block diagram showing the interior of an electrical component box.
[Fig. 4] Figure **4** is a longitudinal cross-sectional view of the electrical component box.
[Fig. 5] Figure **5** is a schematic perspective view of the electrical component box as viewed from the front, wherein electrical components in the interior thereof are not shown and a safety cover is removed therefrom.
[Fig. 6] Figure **6** is a schematic perspective view of the electrical component box as viewed from the front, wherein the safety cover is fitted thereto.
[Fig. 7] Figure **7** is a schematic perspective view of a conventional container refrigeration system.
[Fig. 8] Figure **8** is a schematic perspective view of the conventional container refrigeration system as viewed from the front.

### List of Reference Characters

- **10**: container refrigeration system
- **20**: frame
- **30**: electrical component box
- **31**: box body
- **33**: bottom plate
- **38**: safety cover
- **50**: reinforcing plate
- **51**: first riser (holder)
- **52**: second riser (holder)
- **53**: third riser (holder)
- **S3**: heavy electrical component storage space
- **S4**: light electrical component storage space

### Best Mode for Carrying Out the Invention

Embodiments of the present invention will be described below in detail with reference to the drawings.

An electrical component box according to an embodiment of the invention is mounted in a container refrigeration system for use in sea transport or other transports. The container refrigeration system operates in a refrigeration cycle by circulating refrigerant through a refrigerant circuit and thereby cools the interior of a container.

### <General Structure of Container Refrigeration System>

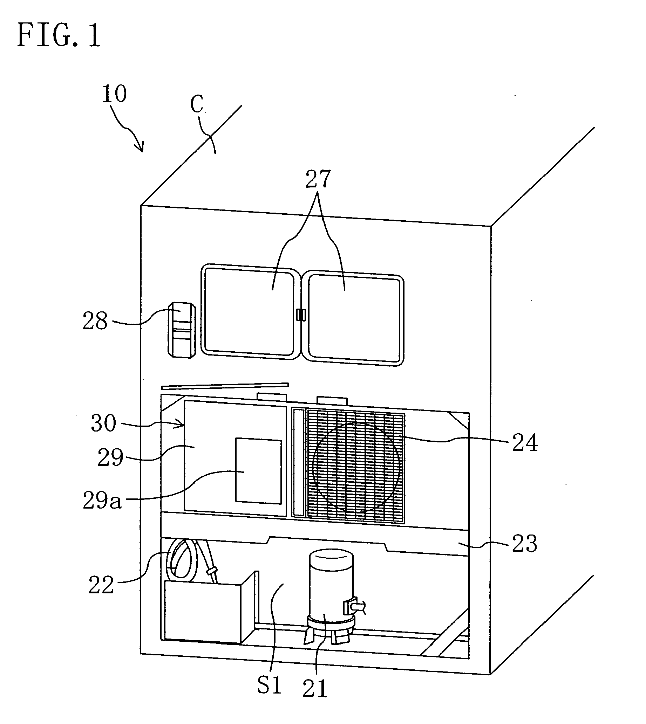

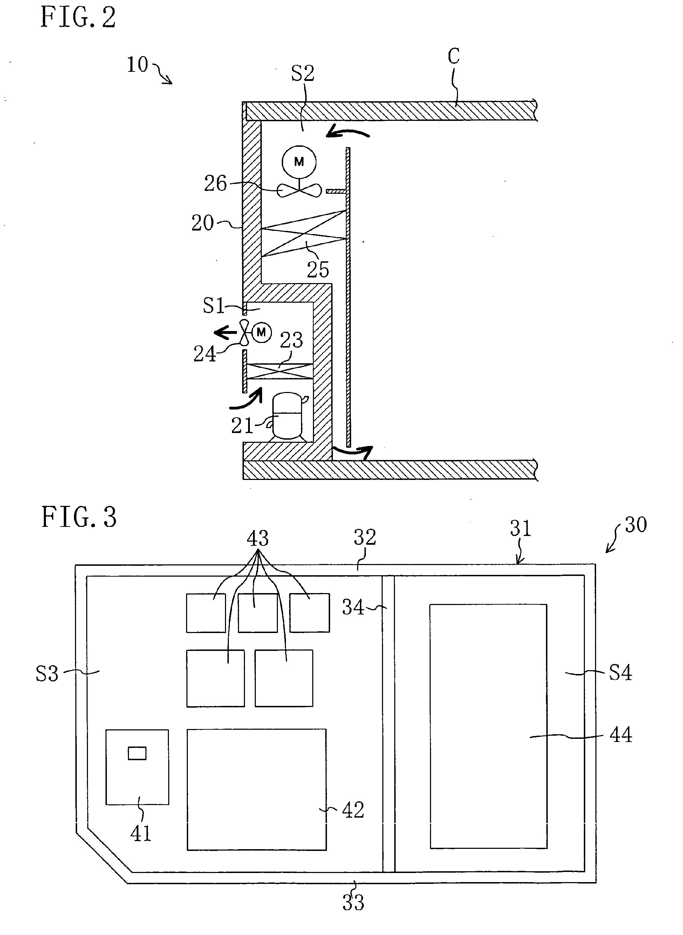

As shown in Figures **1** and **2****,** the container refrigeration system **(10)** includes a frame **(20)** assemblable to a front opening of the container **(C)** for storing goods.

As shown in Figure **2****,** a lower part of the frame **(20)** is depressed towards the interior of the container **(C).** Furthermore, the frame **(20)** has an exterior storage space **(S1)** formed in the lower part to face the outside and has an interior storage space **(S2)** formed in the upper part to face the container interior.

The exterior storage space **(S1)** constitutes an outside air passage through which outside air flows. Placed in the exterior storage space **(S1)** are a compressor **(21),** a power cable **(22),** a condenser **(23)** and an external fan **(24).** The compressor **(21)** is constituted by a fixed displacement scroll compressor. The condenser **(23)** is constituted by a so-called air-cooled condenser for providing heat exchange between outside air fed by the external fan **(24)** and the refrigerant.

The interior storage space **(S2)** constitutes an inside air passage through which inside air flows. Placed in the interior storage space **(S2)** are an evaporator **(25)** and an internal fan **(26).** The evaporator **(25)** provides heat exchange between inside air fed by the internal fan **(26)** and the refrigerant.

The compressor **(21),** the condenser **(23),** the evaporator **(25)** and an unshown expansion valve are connected to each other by refrigerant pipes. As a result, in this container refrigeration system **(10),** a refrigerant circuit operating in a vapor compression refrigeration cycle is constituted.

Furthermore, the frame **(20)** includes a sight glass **(27)** and ventilators **(28)** all of which are formed in an upper part of the front face. The ventilators **(28)** constitute ventilating equipment for ventilating the container interior. The frame **(20)** also includes an electrical component box **(30)** according to the invention and mounted in the front face adjoining the external fan **(24).**

### <Structure of Electrical Component Box>

The electrical component box **(30)** has a box body **(31)** formed in the shape of a box having an opening in the front and made from a resin material. The box body **(31)** is supported to the frame **(20)** so that its opening faces sideways (frontward).

As shown in Figure **3****,** the box body **(31)** has a top plate **(32)** formed at the top and a bottom plate **(33)** formed at the bottom. The box body **(31)** also has a partition plate **(34)** formed inside to extend vertically from the top plate **(32)** to the bottom plate **(33).** The partition plate **(34)** divides the interior of the box body **(31)** right and left into two spaces. The space on the left side of the partition plate **(34)** constitutes a heavy electrical component storage space **(S3)** in which various heavy electrical components are disposed. Disposed in the heavy electrical component storage space **(S3)** are a breaker **(41),** a transformer **(42)** and a plurality of magnet switches **(43, 43,** ...). On the other hand, the space on the right side of the partition plate **(34)** constitutes a light electrical component storage space **(S4)** in which various light electrical components are disposed. Disposed in the light electrical component storage space **(S4)** are a plurality of control boards **(44, 44, ...)** constituting a control circuit of the container refrigeration system.

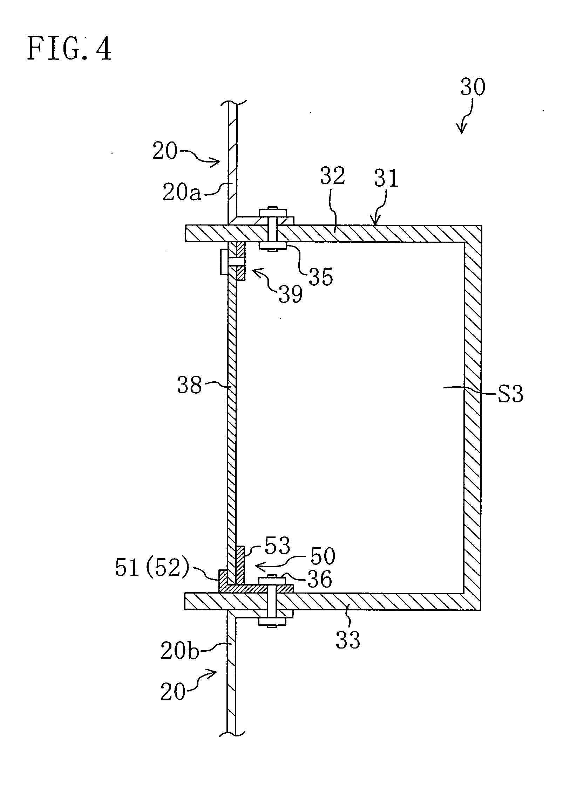

As shown in Figure **4****,** the box body **(31)** is supported by an upper support plate **(20a)** and a lower support plate **(20b)** of the frame **(20).** The upper support plate **(20a)** is formed to bend along the top face of the top plate **(32)** of the box body **(31).** The upper support plate **(20a)** is fastened to the top plate **(32)** by a plurality of bolt and nut pairs **(35).** The lower support plate **(20b)** is formed to bend along the bottom face of the bottom plate **(33)** of the box body **(31).** The lower support plate **(20b)** is fastened to the bottom plate **(33)** by a plurality of bolt and nut pairs **(36).**

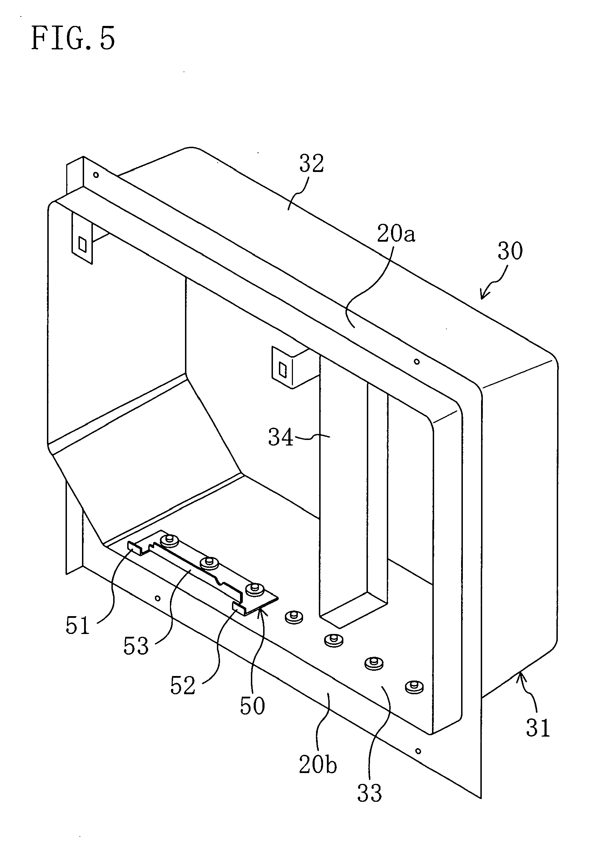

As shown in Figures **4** and **5****,** a reinforcing plate **(50)** for increasing the strength of the box body **(31)** is laid and mounted on the bottom plate **(33)** of the box body **(31).** The reinforcing plate **(50)** is mounted in the heavy electrical component storage space **(S3)** and formed in the shape of a plate extending along the width of the box body **(31).** The reinforcing plate **(50)** is fastened to the lower support plate **(20b)** of the frame **(20),** with the bottom plate **(33)** sandwiched therebetween, by the above bolt and nut pairs **(36).**

The reinforcing plate **(50)** has two slits made one in each of right and left end parts of a side edge thereof located towards the opening of the box body **(31)** (towards the front in Figure 5). The right and left end pieces of the side edge of the reinforcing plate **(50)** thus formed are bent upward halfway through the slits. Thus, a first riser **(51)** and a second riser **(52)** are formed at the left and right ends, respectively, of the reinforcing plate **(50).** Furthermore, the reinforcing plate **(50)** has an intermediate piece of the side edge between the first riser **(51)** and the second riser **(52)** and the intermediate piece is bent upward from the inner ends of the slits. Thus, a third riser **(53)** is formed at the intermediate part of the reinforcing plate **(50).** As a result, the third riser **(53)** extends to a higher level than the first riser **(51)** and the second riser **(52)** and is staggered with respect to the first riser **(51)** and the second riser **(52).**

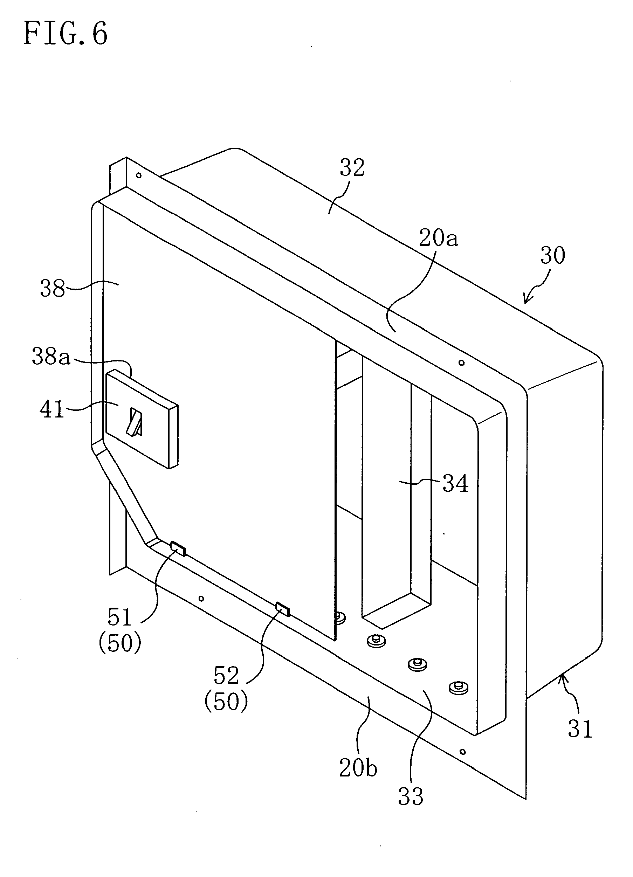

The electrical component box **(30)** includes a safety cover **(38)** for opening and closing the opening of the box body (31). As shown in Figure **6****,** the safety cover **(38)** is provided only in the heavy electrical component storage space **(S3)** and constitutes a cover for safely shielding various heavy electrical components from the outside. The safety cover **(38)** is supported to the reinforcing plate **(50)** with its lower end fitted between the risers **(51, 52, 53)** and thereby detachably attached to the reinforcing plate **(50).** In other words, the risers **(51, 52, 53)** of the reinforcing plate **(50)** constitute a holder for holding the safety cover **(38)** when the safety cover **(38)** covers the opening of the box body **(31).** Therefore, the reinforcing plate **(50)** constitutes a member for reinforcing the bottom plate **(33)** of the box body **(31)** and also constitutes a member for holding the safety cover **(38).**

The upper end of the safety cover **(38)** is fastened to a fastening part **(39)** provided under the top plate **(32)** of the box body **(31).** As a result, the heavy electrical components of various kinds in the box body **(31)** are fully covered with the safety cover **(38)** so that the user cannot touch them. The safety cover **(38)** has a breaker opening **(38a)** formed for the purpose of exposing the breaker **(41)** to the outside. Thus, even with the opening of the box body **(31)** covered with the safety cover **(38),** the user can operate the switch of the breaker **(41).**

The electrical component box **(30)** also includes an outside lid **(29)** detachably attached thereto to further cover the opening of the box body **(31)** from the outside of the safety cover **(38)** (see Figure **2****).** The outside lid **(29)** is provided with an operating part **(29a)** through which the user conducts operation mode change and other controls of the container refrigeration system **(10).**

### - Operational Behavior -

A description is given of the operational behavior of the container refrigeration system **(10)** according to this embodiment. First, in order to start up the container refrigeration system **(10),** the user removes the outside lid **(29)** from the opening of the electrical component box **(30).** Then, in a state of the electrical component box **(30)** shown in Figure **6****,** the switch of the breaker **(41)** exposed to the outside is turned on. As a result, the container refrigeration system **(10)** is energized. Thereafter, the user fits the outside lid **(29)** into the opening of the electrical component box **(30)** again and operates the operating part **(29a)** to start the operation of the container refrigeration system **(10).**

As shown in Figure **2****,** during operation of the container refrigeration system (10), the compressor **(21),** the external fan **(24)** and the internal fan **(26)** are driven. In the refrigerant circuit of the container refrigeration system **(10),** refrigerant discharged from the compressor **(21)** flows through the condenser **(23).** In the condenser **(23),** the refrigerant exchanges heat with outside air fed by the external fan **(24).** As a result, the refrigerant releases heat to the outside air to condense. The refrigerant having condensed in the condenser **(23)** is reduced in pressure by the expansion valve and then flows through the evaporator **(25).** In the evaporator **(25),** the refrigerant exchanges heat with inside air fed by the internal fan **(26).** As a result, the refrigerant takes heat from the inside air to evaporate, whereby the inside air is cooled to a predetermined temperature. The refrigerant having evaporated in the evaporator **(25)** is sucked into the compressor **(21)** and compressed again therein.

### - Maintenance of Electrical Component Box -

In doing maintenance or other services on the electrical components in the electrical component box **(30)** of the container refrigeration system **(10)** as described above, the following operations are done.

First, in doing maintenance on any one of the light electrical components in the electrical component box **(30),** only the outside lid **(29)** is removed from the box body **(31).** Thereafter, the user turns off the breaker **(41)** exposed on the safety cover **(38)** and then makes an exchange of or repairs to the light electrical component.

On the other hand, in doing maintenance on any one of the heavy electrical components in the electrical component box **(30),** the breaker **(41)** is turned off with the outside lid **(29)** removed from the box body **(31)** and, then, the safety cover **(38)** is also removed. In removing the safety cover **(38),** the upper end of the safety cover **(38)** is released from the fastening to the fastening part **(39).** Then, the lower end of the safety cover **(38)** is pulled out from between the risers **(51, 52, 53).** As a result, the safety cover **(38)** is removed from the opening of the box body **(31),** so that the heavy electrical components are exposed to the user. In this state, the user makes an exchange of or repairs to the target heavy electrical component.

### - Effects of Embodiment -

According to this embodiment, since the reinforcing plate **(50)** is mounted on the bottom plate **(33)** of the box body **(31),** the bottom plate **(33)** can be reinforced. This surely prevents the box body **(31)** from being broken and reduces the thickness of the box body **(31)** and in turn reduces the weight of the box body **(31).** Therefore, the box body **(31)** can be reduced in cost and, in turn, the frame **(20)** supporting the box body **(31)** can be simplified.

Furthermore, in this embodiment, the reinforcing plate **(50)** has risers **(51, 52, 53)** formed to hold the safety cover **(38).** Therefore, although in conventional electrical component boxes a separate member for holding the safety cover is necessary, the electrical component box of this embodiment does not need such a separate member. Hence, according to the present invention, the bottom plate **(33)** of the box body **(31)** can be reinforced without increasing the number of parts, thereby providing an electrical component box **(30)** having a simple structure. Furthermore, the risers **(51, 51, 53)** can be easily formed by cutting a side edge of the reinforcing plate **(50)** into some pieces and bending the pieces upward. Thus, the holder for the safety cover **(38)** can be formed in the reinforcing plate **(50)** by a relatively simple machining.

Furthermore, according to this embodiment, since the box body **(31)** is made from a resin material, the box body **(31)** can be further reduced in weight. Since the reinforcing plate **(50)** is mounted on the bottom plate **(33)** while the box body **(31)** is made from a resin material, the bottom plate **(33)** can be prevented from being broken. Furthermore, when the container refrigeration system **(10)** is used in sea transport, the box body **(31)** can be effectively prevented from being rusted by salt water. This ensures a good reliability of the box body **(31).**

Furthermore, in this embodiment, the reinforcing plate **(50)** and the safety cover **(38)** are provided only in the heavy electrical component storage space **(S3).** Therefore, the reinforcing plate **(50)** and the safety cover **(38)** can be saved in size. Although in respect of the bottom plate **(33)** of the box body **(31)** its part in the heavy electrical component storage space **(S3)** is put under a large load, the reinforcing plate **(50)** mounted on that part effectively prevents the box body **(31)** from being broken. Furthermore, since the heavy electrical components that would be dangerous especially in case of the user touching them are covered with the safety cover **(38),** the safety of the user can be sufficiently ensured.

### «Other Embodiments»

The above embodiment may have the following configurations.

Although in the above embodiment the box body **(31)** of the electrical component box **(30)** is made from a resin material, it may be made from stainless steel, aluminium or any other appropriate material. Also in such a case, since the reinforcing plate **(50)** is mounted on the bottom plate **(33),** the box body **(31)** can be reduced in thickness.

The above embodiments are merely preferred embodiments in nature and are not intended to limit the scope, applications and use of the invention.

### Industrial Applicability

As can be seen from the above description, the present invention is useful for structures of electrical component boxes used in container refrigeration systems for cooling the interiors of containers.

## Claims

1. An electrical component box of a container refrigeration system for cooling the interior of an container, the electrical component box comprising:
a box body formed in the shape of a box having an opening in one face and supported, with the opening oriented sideways, to a frame of the container refrigeration system from below;
a safety cover for opening and closing the opening of the box body; and
a reinforcing plate mounted on the bottom plate of the box body to sandwich the bottom plate between the reinforcing plate and the frame, the reinforcing plate having a holder for holding the safety cover.

2. The electrical component box of the container refrigeration system of claim 1, wherein the box body is made from a resin material.

3. The electrical component box of the container refrigeration system of claim 1 or 2, wherein
the interior of the box body is divided into a heavy electrical component storage space for storing heavy electrical components and an light electrical component storage space for storing light electrical components, and
the safety cover and the reinforcing plate are provided only in the heavy electrical component storage space.

4. The electrical component box of the container refrigeration system of any one of claims 1 to 3, wherein
the holder comprises a plurality of risers formed by cutting a side edge of the reinforcing plate into some pieces and bending the pieces upward, and
the safety cover is detachably attached to the reinforcing plate with the lower end thereof fitted between the plurality of risers.
